# EUROPÄISCHE PATENTSCHRIFT

(11) **EP 2 140 220 B1**
(45) Veröffentlichungstag und Bekanntmachung des Hinweises auf die Patenterteilung: **15.09.2010**
(21) Anmeldenummer: 08749080.1
(22) Anmeldetag: 23.04.2008
(51) Int. Cl.: F41A 19/59, F41A 17/06

(54) **STELLVORRICHTUNG**
ACTUATING DEVICE
DISPOSITIF DE RÉGLAGE

(30) Priorität: 24.04.2007 DE 102007019310
(43) Veröffentlichungstag der Anmeldung: 06.01.2010
(73) Patentinhaber: Heckler & Koch GmbH, 78727 Oberndorf/Neckar (DE)
(72) Erfinder: BECKMANN, Rudi, 78733 Rötenberg (DE); FISCHBACH, Wilhelm, 78652 Deisslingen (DE); ABERL, Johannes, 85452 Eichenried (DE)
(74) Vertreter: Jacoby, Georg
(86) Internationale Anmeldenummer: PCT/EP2008/003281
(87) Internationale Veröffentlichungsnummer: WO 2008/128773

(56) Entgegenhaltungen:
- WO-A-2004/010070
- US-A- 2 397 507
- US-A- 2 413 241
- US-A- 2 457 827
- US-A- 2 576 953
- US-A- 3 971 291

## Beschreibung

Die vorliegende Erfindung betrifft eine Stellvorrichtung zur Betätigung einer Waffe mit einem ersten Stellantrieb, der in einer Arbeitsrichtung wirkt um ein Stellelement aus einer Ruhe- in eine Arbeitslage zu verstellen.

Stellvorrichtungen können bei Waffen beispielsweise dazu genutzt werden, den Abzug einer Waffe bzw. die Sicherungseinrichtung oder eine Feuerwahleinrichtung zu betätigen. Solche Stellvorrichtungen sind beispielsweise notwendig, um fest eingebaute bzw. lafettierte Waffen (an einem Fahrzeug, einem Flugzeug, einem Schiff, einem Gebäude oder in einem Gefechtsstand) ferngesteuert zu betätigen, ohne daß dazu ein unmittelbarer Zugang zur Waffe selbst erforderlich ist. Die Stellvorrichtung kann dann zum Beispiel ferngesteuert elektrisch, hydraulisch, pneumatisch oder in anderer geeigneter Weise angesteuert werden.

Bei Stellvorrichtungen, die auf den Abzug wirken, die also direkt zum Abfeuern der Waffe dienen, besteht das Problem, daß relativ lange Stellwege - beispielsweise um einen Abzug vollständig durchzuziehen - überbrückt werden müssen, um die gewünschte Stellwirkung zu erzielen. Bei der Abzugsbetätigung ist es auch wichtig, daß diese sehr schnell und unmittelbar gestoppt werden kann, um das Feuer schnell einzustellen. Insbesondere bei Waffen mit hohen Kadenzen (Maschinengewehre, Bordkanonen, Granatmaschinenwaffen) besteht eine wichtige zu lösende Aufgabe darin, daß kontrolliert kurze Feuerstöße abgegeben werden können.

Gleichzeitig soll der Energiebedarf solcher Stellvorrichtungen möglichst gering sein, um begrenzte Energieressourcen zu schonen.

Nutzt man beispielsweise einen Solenoidantrieb, bei dem durch ein elektromagnetisch betätigtes Stellelement der Abzugsweg überbrückt werden soll, so muß entweder ein relativ langer Hub mit entsprechenden damit einhergehenden hohen Stromverlusten realisiert werden oder es ist ein Übersetzungsgetriebe erforderlich, welches dann höhere Betätigungskräfte und damit höhere Wirkspannungen erfordert. Ein untersetzter Antrieb wirkt u.U. nur mit reduzierter Wirkgeschwindigkeit auf das Stellelement. Eine herabgesetzte Wirk- bzw. Stellgeschwindigkeit ist insbesondere beim Unterbrechen des Feuervorgangs nachteilig

Aus US 2,576,953 und US 2,457,827 ist eine Stellvorrichtung bekannt, bei der die Abzugsbetätigung über eine durchlaufend rotierende Antriebseinrichtung erfolgt, die mittels eines Kupplungs-/Unterbrechermechanismus für einen 360° Arbeitszyklus mit einem Schwenkhebelantrieb gekoppelt wird, der wiederum einen auf den Abzugsmechanismus wirkenden Schubstangenmechanismus einen einzigen Hin- und Her-Bewegungszyklus ausführen lässt. Eine Unterbrechung des einmal initiierten Bewegungszyklus ist nicht möglich.

Davon ausgehend besteht die Aufgabe der vorliegenden Erfindung darin, eine verbesserte Stellvorrichtung bereitzustellen, bei der die oben genannten Nachteile zumindest teilweise ausgeräumt werden.

Eine solche Stellvorrichtung ist im Anspruch 1 angegeben. Dabei ist der erste Stellantrieb über eine schaltbare Kupplung lösbar mit dem als Schwenkhebel ausgebildeten Stellelement - welches beispielsweise auf einen Abzugshebel bzw. einen Sicherungs-/Flurwahlhebel wirkt - koppelbar. Die Erfindung ermöglicht es damit, den Stellantrieb optimal an seine Aufgabe anzupassen. Der erste Stellantrieb wirkt dabei z.B. nur zum Auslösen des Schusses, d.h. zum Bewegen des Abzugs in seine Arbeitslage. Durch die lösbare Kopplung des ersten Stellantriebs mit dem Stellelement über eine schaltbare Kupplung braucht damit der erste Stellantrieb zur Unterbrechung des Schusses selbst nicht in seine Ausgangs- oder Ruhestellung zurückgebracht werden. Er wird lediglich vom Stellelement abgekoppelt, welches dann unter direkter Wirkung der Rückstellmechanik des Abzugs in seine Ruhestellung zurückgebracht wird. So ist eine schnellstmögliche Feuerunterbrechung realisierbar.

Es ist ein entgegengesetzt wirkender zweiter Stellantrieb vorgesehen werden, der beispielsweise die Rückstellmechanik des Abzugs beschleunigend unterstützt.

Wird die Stellvorrichtung beispielsweise zur Betätigung einer Sicherungs- bzw. einer Feuerwahleinrichtung verwendet, so kann der erste Stellantrieb beispielsweise einen Feuerwahlhebel bei Aktivierung in die entsicherte Stellung bringen, während das Zurückstellen des Feuerwahlhebels in die gesicherte Stellung ebenfalls schnell und unmittelbar ohne Rückstellung des ersten Stellantriebs unter Wirkung des zweiten Stellantriebs erfolgt.

Dabei ist der erste Stellantrieb (und gemäß Anspruch 2 der zweite Stellantrieb) als Schwenkantrieb ausgebildet. Dies hat mehrere Vorteile: Schwenkantriebe wirken normalerweise entlang eines Kreissektors und sind daher mit einfachen und kostengünstig realisierbaren Schwenklageranordnungen realisierbar. Linearantriebe sind dagegen meist nur mit höherem Aufwand zu realisieren. Bei der Verbindung eines Schwenkantriebs mit einer Kopplung braucht der Stellantrieb nur in eine Richtung zu arbeiten, d.h. der Stellantrieb kann von seinem letzten Haltepunkt ausgehend immer wieder ein entsprechendes Stellelement in die gleiche Richtung verstellen (das Stellelement ist dazu vom Stellantrieb abkoppelbar und relativ zu diesem z. B. durch den zweiten Stellantrieb ver-/rückstellbar). Damit kann der Stellantrieb immer in eine Richtung angetrieben werden.

Die Weiterbildung gemäß Anspruch 3 betrifft einen ersten motorisch angetriebenen Stellantrieb, der insbesondere als Schneckenrad-Getriebeeinheit mit einem Elektromotor ausgebildet sein kann und bei dem der zweite Stellantrieb als spannbare Antriebseinheit ausgebildet ist. Motorisch angetriebene Stellantriebe stehen insbesondere als Schwenkantriebe in großer Anzahl und Vielfalt zur Verfügung. Schneckenrad-Getriebeeinheiten mit einem Elektromotor sind darüber hinaus in der Regel selbsthemmend und können stromsparend über beliebig lange Schwenk- bzw. Stellwege hohe Stellkräfte mit hinreichend großer Stellgeschwindigkeit aufbringen. Zum Halten einer bestimmten Stellung ist keine Energiezufuhr erforderlich. Spannbare Antriebseinheiten haben den Vorteil, daß sie keine zusätzliche Energiequelle erfordern, sondern die erforderliche Stellenergie als Spannungsenergie speichern (ähnlich einem mechanischen Uhrwerk). Bei entsprechender Vorspannung können sie auch mehrere Stellvorgänge ausführen.

In der Weiterbildung gemäß Anspruch 4 ist dieses Prinzip weiter verfeinert: Hier wird nämlich der erste Stellantrieb genutzt, um den zweiten Stellantrieb zu spannen, während der erste Stellantrieb das Stellelement in die Arbeitslage bringt. Damit kann der zweite Stellantrieb das Stellelement immer wieder in seine Ruhelage zurückstellen, ohne daß eine zusätzliche Energieversorgung oder ein gesondertes Nachspannen erforderlich ist.

Nach Anspruch 5 ist die Kupplung als federbelastete elektromagnetisch wirkende Kupplung ausgebildet, die nur bei elektrischer Erregung ihre Kupplungsstellung einnimmt, d.h. bei Wegfall der Stromversorgung wird die Kupplung gelöst (gelüftet) und die Stellvorrichtung bringt das Stellelement sofort in seine Ruhelage. Es können also bei der Verwendung der Stellvorrichtung zum Auslösen eines Abzugs bei einer Unterbrechung der Stromversorgung keine Schüsse abgegeben werden bzw. wird die Schußabgabe sofort eingestellt.

Die Weiterbildung gemäß Anspruch 6 erweitert die Gestaltungsmöglichkeiten und erlaubt beispielsweise besonders flache Anordnungen mit kurzen Schwenkwellen in räumlich beschränkter Umgebung. Dabei kann dann gemäß Anspruch 7 ein Koppelgetriebe zwischen Stellelement und erstem Stellantrieb vorgesehen sein, das beispielsweise als Kurbelschleife ausgebildet ist.

Gemäß Anspruch 8 wird der Stellweg des ersten Stellantriebs über ein Schaltstück, das auf einen als Unterbrecher wirkenden Schalter wirkt, eingestellt. Dieser Stellweg kann zum Beispiel über einen verschwenkbaren Schaltnocken angepaßt werden. So kann die Stellvorrichtung an die Gegebenheiten unterschiedlicher Waffenbauteile angepaßt werden. Die Anordnung des zweiten Stellantriebes koaxial zur Schwenkachse des Stellelements gemäß Anspruch 9 erlaubt eine konstruktiv besonders kompakte Konstruktion.

Anspruch 10 betrifft eine Abzugsvorrichtung, bei welcher das Stellelement in seiner Arbeitslage einen Waffenabzug zur Schußauslösung betätigt. Dabei wird der erste Stellantrieb der Stellvorrichtung ferngesteuert über einen Schalter betätigt (Anspruch 11). Gemäß Anspruch 12 ist eine zweite erfindungsgemäße Stellvorrichtung vorgesehen, welche zusätzlich auf eine Sicherungseinrichtung der Waffe wirkt, und zwar so, daß die Sicherungseinrichtung in Arbeitslage der zweiten Stellvorrichtung in entsicherter Stellung ist. Auch hier ist das Prinzip maximaler Sicherheit realisiert: Im Falle einer Stromunterbrechung ist die erste auf den Abzug wirkende Stellvorrichtung nicht betätigbar und gleichzeitig bringt die zweite Stellvorrichtung die Sicherungseinrichtung der Waffe unmittelbar in ihre gesicherte Stellung. Bei einer betriebsstörung ist die Waffe selbst immer im Zustand maximaler Sicherheit.

Die Aktivierung kann dabei gemäß Anspruch 13 über einen einzigen Schalter realisiert werden, oder gemäß Anspruch 14 über getrennte Schalter: einer zur Entsicherung/Sicherung und einer zur Schußabgabe/Unterbrechung der Schußabgabe. Die Schalter selbst können dabei an die übliche Betätigung einer Waffe angepaßt werden. Beispielsweise kann der Schalter zur Aktivierung der Sicherungseinrichtung als Rastschalter ausgebildet sein, während der Schalter zur Aktivierung der Abzugseinrichtung als Tastschalter ausgebildet sein kann.

Anspruch 15 betrifft schließlich eine Waffe mit einer erfindungsgemäßen Stelleinrichtung bzw. einer entsprechenden Abzugsvorrichtung.

Ein Ausführungsbeispiel der vorliegenden Erfindung wird nachfolgend anhand der Zeichnungen beschrieben. Darin zeigen:
- Fig. 1: eine perspektivische Teilansicht einer erfindungsgemäßen Abzugsvorrichtung, die an eine Waffe angebaut ist,
- Fig. 2: eine Teilansicht der geöffneten Abzugsvorrichtung aus Fig. 1,
- Fig. 3: einen Längsschnitt (Schnitt A-A aus Fig. 2) der in Fig. 1 und 2 dargestellten Abzugsvorrichtung,
- Fig. 4: einen Querschnitt (Schnitt B-B aus Fig. 2) der erfindungsgemäßen Abzugsvorrichtung, und
- Fig. 5: einen schematischen Schaltplan einer erfindungsgemäßen Stellvorrichtung.

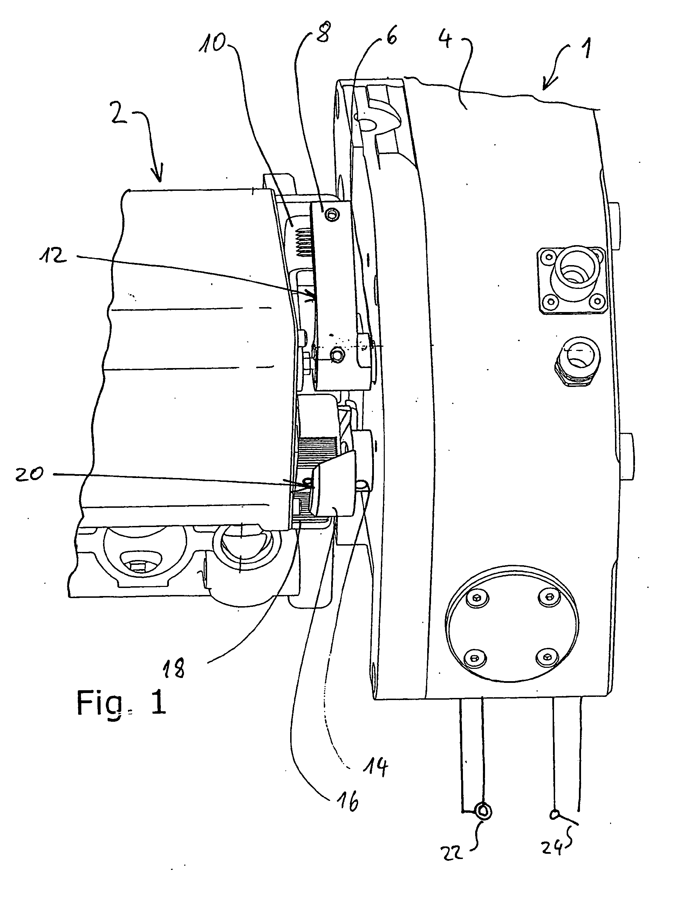

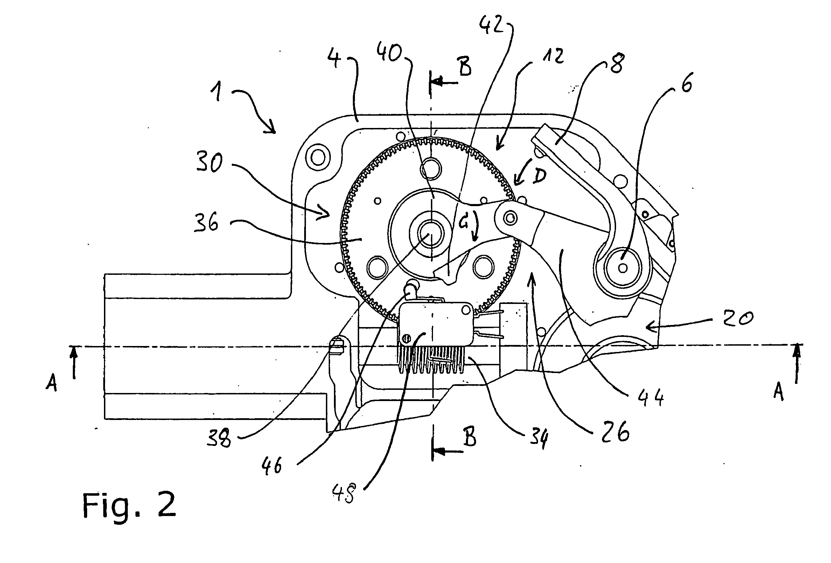

Das in Fig. 1 dargestellte Ausführungsbeispiel zeigt eine Abzugsvorrichtung 1, die am Bedienbereich 2 einer nicht weiter dargestellten Waffe angeordnet ist. Aus dem Gehäuse 4 der Abzugsvorrichtung 1 ragt eine Antriebswelle 6, auf der ein als Stellelement dienender Schwenkhebel 8 fixiert ist. Das von der Welle radial abstehende Ende des Schwenkhebels 8 liegt nahe am Abzugshebel 10 der Waffe, um diesen betätigen zu können. Antriebswelle 6 und Schwenkhebel 8 sind Teil einer überwiegend im Innern der Abzugsvorrichtung 1 angeordneten ersten Stellvorrichtung 12 (Fig. 2-4).

Aus dem Gehäuse 4 der Abzugsvorrichtung 1 ragt eine weitere Antriebswelle 14, auf der ebenfalls ein Schwenkhebel 16 fixiert ist und der im Bereich einer Sicherungswippe 18 angeordnet ist, über die die Waffe ent- bzw. gesichert werden kann. Es gibt auch Waffen, bei denen so eine Sicherungswippe 18 bzw. ein Sicherungshebel als Feuerwahlhebel dient, an dem die Waffe nicht nur - gesichert wird, sondern an dem auch ein Feuermodus einstellbar ist (Einzelfeuer, Feuerstoß, Dauerfeuer). Antriebswelle 14 und Schwenkhebel 16 zur Betätigung der Sicherungswippe 18 sind einer zweiten Stellvorrichtung 20 zugeordnet, die ebenfalls weitgehend im Gehäuse 4 der Abzugsvorrichtung 1 untergebracht ist. Die Stellvorrichtungen 12, 20 der Abzugsvorrichtung 1 werden über schematisch dargestellte Schalter 22, 24 betätigt, die gegebenenfalls über eine nicht-dargestellte Steuerung die Stellvorrichtungen 12 und 20 ansteuern. Dabei kann der Schalter 22 zum Betätigen der auf den Abzugshebel 10 wirkenden ersten Stellvorrichtung 12 als Taster ausgebildet sein, der Schalter 24 zum Betätigen der auf die Sicherungswippe 18 wirkenden zweiten Stellvorrichtung 20 als Wahlschalter.

In einer anderen Ausführung können sowohl erste als auch zweite Stellvorrichtungen 12 und 20 über einen einzigen Schalter betätigt werden, der dann bewirkt, daß bei Schalterbetätigung die Waffe zuerst über die zweite Stellvorrichtung 20 entsichert und dann über die erste Stellvorrichtung 12 abgefeuert wird.

Funktion und Aufbau der ersten Stellvorrichtung 12 werden nun anhand der Fig. 2 bis 5 beschrieben.

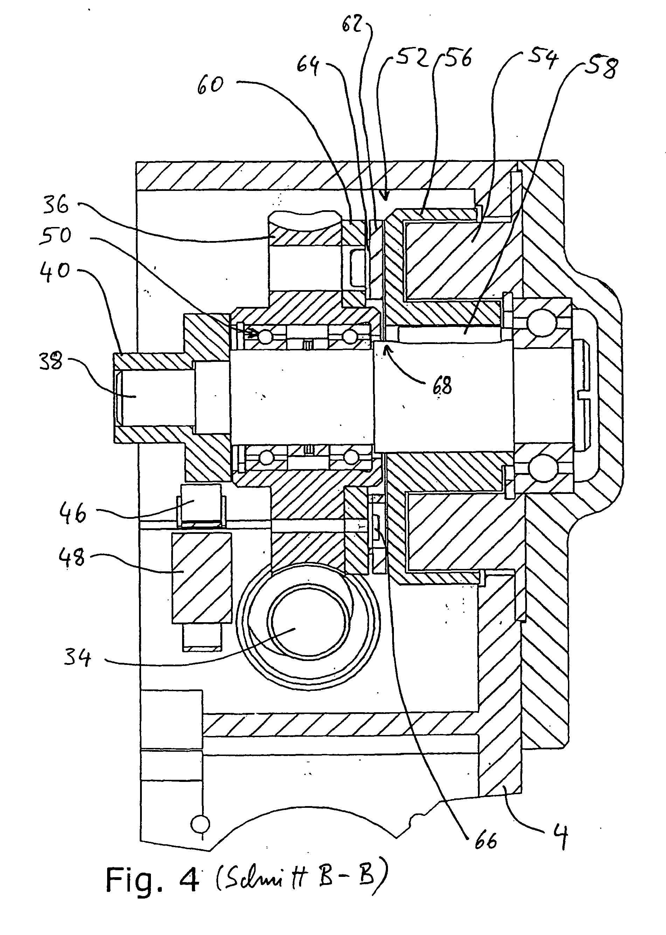

In Fig. 2 ist die erste Stellvorrichtung 12 im geöffneten Gehäuse 4 der Abzugsvorrichtung 1 dargestellt. Die Antriebswelle 6, die den Schwenkhebel 8 trägt und im Gehäuse 4 drehbar gelagert ist, ist über die Kurbelschleife 26 mit dem ersten Stellantrieb 30 gekoppelt, der als motorisch angetriebene Schneckenrad-Getriebeeinheit ausgebildet ist. Dabei ist ein Elektromotor 32 vorgesehen, der die Schnecke 34 antreibt, die wiederum das Schneckenrad 36 antreibt, das auf der Welle 38 drehbar gelagert ist (siehe Fig. 4). Auf der Welle 38 sitzt drehfest die Kurbelschwinge 40, die mit einem Schaltnocken 42 versehen ist. Die Kurbelschwinge 40 bildet zusammen mit der an der Antriebswelle 6 fixierten Kurbelschwinge 44 die Kurbelschleife 26.

Der Schaltnocken 42 wirkt je nach Drehstellung der Kurbelschwinge 40 auf ein Kontaktelement 46 eines Endschalters 48. Bei entsprechender Drehstellung der Kurbelschwinge 40 schaltet dann der Schaltnocken 42 über den Endschalter 48 den Elektromotor 32 ab. Durch die Selbsthemmung der Schneckenradgetriebeeinheit wird damit auch der Schwenkhebel 8 in seiner Arbeitslage gehalten, in der er den Abzugshebel 10 betätigt.

Fig: 4 zeigt die Kopplung des Schneckenrades 36 mit der Kurbelschwinge 40 über die Welle 38. Das Schneckenrad 36 ist über eine Lageranordnung 50 drehbar auf der Welle 38 gelagert. Zur drehfesten Kopplung ist eine schaltbare Kupplung 52 vorgesehen, die als Elektromagnetkupplung ausgebildet ist. Sie weist einen Spulenkörper 54 auf, der drehfest im Gehäuse 4 fixiert ist, und eine Antriebsnabe 56, die über eine Paßfederverbindung 58 drehfest auf der Welle 38 (aber drehbar zum Spulenkörper 54) angeordnet ist. Am Schneckenrad 36 ist über einen Adapterring 60 eine Ankerscheibe 62 über eine daran befestigte Federscheibe 64 drehfest fixiert. Adapterring 60, Ankerscheibe 62 und Federscheibe 64 sind über Befestigungsschrauben 66 drehfest mit dem Schneckenrad 36 gekoppelt.

Die Federscheibe 64 hält die Ankerscheibe 62 mit ihrer Stirnfläche in axialer Richtung der Welle 38 in einem Abstand von der gegenüberliegenden Stirnfläche der Antriebsnabe 56, so daß zwischen beiden Flächen ein sogenannter Luftspalt 68 besteht (diese Stellung ist in Fig. 4 dargestellt).

Bei elektrischer Erregung der Spule (nicht dargestellt) im Spulenkörper 54 wird die Ankerscheibe 62 unter elastischer Verformung der Federscheibe 64 in axialer Richtung mit ihrer Stirnfläche gegen die Stirnfläche der Antriebsnabe 56 gezogen. Der so gebildete Reibschluß zwischen Ankerscheibe 62 und Antriebsnabe 56 koppelt Welle 38 mit dem Schneckenrad 36. Wird in dieser Stellung das Schneckenrad 36 angetrieben, so verdreht es über die Welle 38 die Kurbelschwinge 40 entsprechend.

In entkoppelter Stellung ist die Kurbelschwinge 40 zusammen mit der Welle 38 relativ zum Schneckenrad 36 und zum Gehäuse 4 frei drehbar. Das Schneckenrad 36 wird dabei durch die stillstehende Schnecke 34 in seiner Drehstellung gehalten. Bei angetriebener Schnecke 34 dreht sich das Schneckenrad 36 auf der Welle 38.

Bei Betätigung des ersten Stellantriebes 30 in seiner Ruhestellung (siehe Fig. 2) geschieht folgendes: Über den entsprechenden Schalter 22 wird die schaltbare Kupplung 52 geschlossen und der Elektromotor 32 angeschaltet. Die Schnecke 34 bewegt das Schneckenrad 36 zusammen mit der über die Welle 38 angekoppelten Kurbelschwinge 40 in Richtung des Pfeils C (Fig. 2). Dabei wird der über die Kurbelschleife 26 gekoppelte Schwenkhebel 8 in Richtung D in seine Arbeitsstellung gebracht, in der er über den Abzugshebel 10 die Waffe auslöst. In dieser Stellung trifft der Schaltnocken 42 auf das Kontaktelement 46 des Endschalters 48, der dann den Elektromotor 32 stoppt. Die Erregung der Elektromagnetkupplung 52 wird jedoch aufrechterhalten; diese bleibt geschlossen und der Hebel 8 bleibt im Eingriff mit dem Abzugshebel 10. Erst wenn die Betätigung des Schalters 22 unterbrochen wird, wird auch die Stromzufuhr zur Elektromagnetkupplung 52 unterbrochen und damit Welle 38 und Kurbelschwinge 40 freigegeben Der Rückstellmechanismus des Abzugshebels 10 bringt den Schwenkhebel 8 zurück in seine Ruhelage.

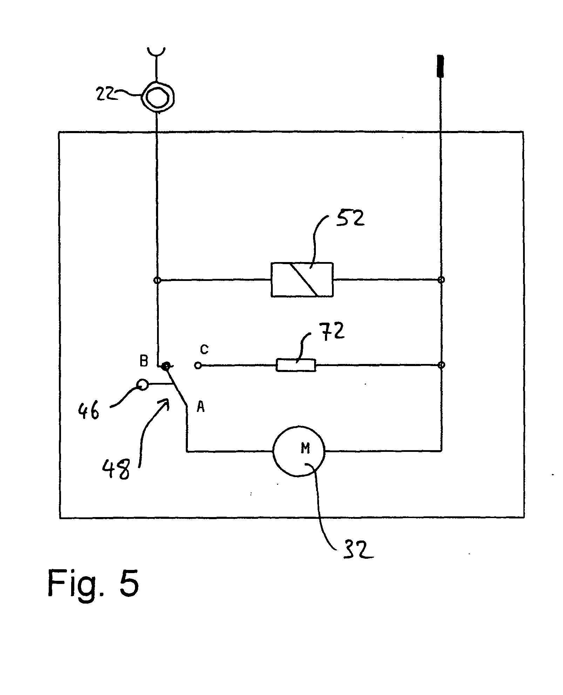

Fig. 5 zeigt einen schematischen Schaltplan, über den die oben beschriebene Funktion realisierbar ist. Dabei sind die Elektromagnetkupplung 52 und der Elektromotor 32 parallel geschaltet. Befindet sich der Schwenkhebel 8 in seiner Ruhestellung, so befindet sich der Schalter 48 in der dargestellten Stellung und schließt bei Betätigung des Tasters 22 den Stromkreis zum Antriebsmotor 32. Gelangt der Schaltnocken 42 (siehe Fig. 2) an das Kontaktelement 46, wird der Schalter 48 umgeschaltet, die Stromzufuhr zum Motor wird unterbrochen und der Motor wird über den Widerstand 72 kurzgeschlossen und dadurch sofort gestoppt. Die Stromversorgung der Elektromagnetkupplung 52 bleibt davon unberührt und die Kupplung bleibt geschlossen. Erst wenn die Stromzufuhr - wie bereits oben erwähnt - vollständig abgeschaltet oder auch unterbrochen wird, fällt die Wirkung der Elektromagnetkupplung 52 weg und der Schwenkhebel 8 wird entkoppelt und kann zurückgestellt werden.

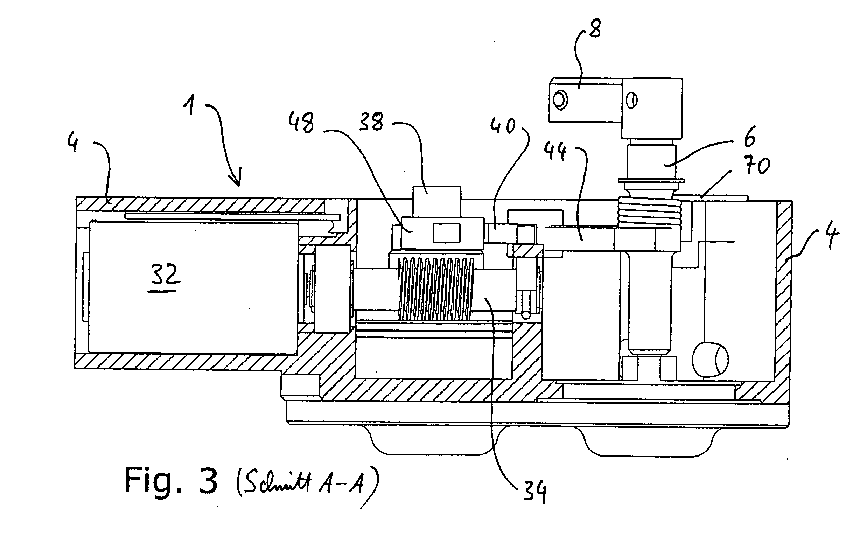

Der oben angegebene Rückstellvorgang wird im dargestellten Ausführungsbeispiel durch einen zweiten Stellantrieb unterstützt, der als zwischen Gehäuse 4 und Antriebswelle 6 wirkende Schenkelfeder 70 ausgebildet ist (siehe Fig. 3). Die Schenkelfeder 70 wird beim Verstellen des Schwenkhebels 8 in seine Arbeitslage gespannt und drückt ihn zurück in seine Ruhelage, sobald Schneckenrad 36 und Welle 38 und damit erste Stellvorrichtung 12 und Schwenkhebel 8 entkoppelt sind. Über die Kurbelschleife 26 wird beim Rückstellen des Schwenkhebels 8 auch die Kurbelschwinge 40 zusammen mit dem Schaltnocken 42 zurückgestellt. Diese Ausführung entlastet den Rückstellmechanismus des Abzugshebels 10 und ist insbesondere auch geeignet, entsprechende Stellhebel an einer Waffe zwischen verschiedenen Stellungen aktiv hin- und herzuschalten. Die zweite Stellvorrichtung 20 arbeitet nach dem gleichen Prinzip.

In einer anderen Ausführung kann der Schwenkhebel 8 auch direkt auf der Welle 38 fixiert sein. Das gleiche gilt für den zweiten Stellantrieb (die Schenkelfeder 70), der dann direkt zwischen Gehäuse 4 und Welle 38 wirkt.

Neben der Ausführung mit einem Schaltnocken 42 und einem Schalter 48 können über mehrere Schaltnocken 42 und ggf. mehrere Schalter 48 auch mehrere Schwenkstellungen der Kurbelschwinge 40 detektiert werden. Dies ist zum Beispiel hilfreich, wenn mehr als zwei Schaltstellungen für den Schwenkhebel 8 oder ein entsprechendes Stellelement vorgesehen sind. Zum Beispiel, wenn so eine Stellvorrichtung zur Betätigung eines Feuerwahlhebels dienen soll, der mehr als zwei unterschiedliche Stellungen.einnehmen kann. Es gibt auch Ausführungen, bei denen anstelle einer mechanischen Schaltung beispielsweise elektronische oder elektrooptische Stellungsdetektoren vorgesehen sind, um eine oder mehrere Schaltstellungen zu erfassen und diese über eine Steuerung entsprechend zu berücksichtigen.

Weitere Ausführungsformen und varianten der vorliegenden Erfindung ergeben sich für den Fachmann im Rahmen der anhängenden Ansprüche.

## Patentansprüche

1. Stellvorrichtung (12, 20) zur Betätigung einer Abzugs-/Feuerwahl- oder Sicherungseinrichtung einer Waffe mit einem ersten, in eine Arbeitsrichtung wirkenden Stellantrieb (30), der dazu ausgebildet ist, ein Stellelement (8, 16) aus einer Ruhelage in eine Arbeitslage zu verstellen, in der es einen waffenabzug (10) bzw. einen Sicherungs-/Feuerwahlhebel (18) betätigt,
wobei der erste Stellantrieb (30) über eine schaltbare Kupplung (52) lösbar mit dem Stellelement (8) koppelbar ist, als Schwenkantrieb ausgebildet ist und auf das als Schwenkhebel ausgebildete Stellelement (8) wirkt, **dadurch gekennzeichnet, daß**
ein zweiter Stellantrieb (70) vorgesehen ist, der entgegengesetzt zur Arbeitsrichtung wirkt, um das Stellelement (8) bei gelöster Kupplung (52) aus der Arbeitslage in seine Ruhelage zu bringen.

2. Stellvorrichtung (12, 20) nach Anspruch 1, bei welcher der zweite Stellantrieb (70) als Schwenkantriebe ausgebildet ist.

3. Stellvorrichtung (12, 20) nach Anspruch 1 oder 2, bei welcher der erste Stellantrieb (30) motorisch angetrieben, insbesondere als Schneckenrad-Getriebeeinheit (34, 36) mit einem Elektromotor (32), ausgebildet ist und der zweite Stellantrieb 70 als spannbare Antriebseinheit, insbesondere als Federantriebseinheit ausgebildet ist.

4. Stellvorrichtung (12, 20) nach Anspruch 3, bei welcher der erste Stellantrieb (30), der zweite Stellantrieb (70) und die Kupplung (52) so ausgebildet und angeordnet sind, daß der erste Stellantrieb (30) im Betrieb und bei wirkender Kupplung (52) das Stellelement (8) in die Arbeitslage bringt und dabei den zweiten Stellantrieb .(70) spannt.

5. Stellvorrichtung (12, 20) nach einem der vorhergehenden Ansprüche, bei welcher die Kupplung (52) als federbelastete, elektromagnetisch wirkende Kupplung ausgebildet ist, und so angeordnet ist, daß sie bei elektrischer Erregung ihre Kupplungsstellung einnimmt.

6. Stellvorrichtung (12, 20) nach einem der Ansprüche 2 bis 5, bei welcher der erste Stellantrieb (30) und das Stellelement (8) auf zwei parallelen Schwenkachsen angeordnet sind.

7. Stellvorrichtung (12, 20) nach Anspruch 6, bei welcher der erste Stellantrieb (30) und das Stellelement (8) über ein Koppelgetriebe (26), insbesondere eine Kurbelschleife gekoppelt sind.

8. Stellvorrichtung (12, 20) nach einem der Ansprüche 2 bis 7, bei welcher der Stellweg des ersten Stellantriebs (30) über ein auf einen Schalter (48) wirkendes Schaltstück (42), insbesondere als verschwenkbarer Schaltnocken ausgebildet, dem gewünschten Stellweg des Stellelements (8) entsprechend festlegbar ist.

9. Stellvorrichtung (12, 20) nach einem der vorhergehenden Ansprüche, bei welcher der zweite Stellantrieb (70) koaxial zur Schwenkachse des Stellelements (8) angeordnet ist.

10. Abzugsvorrichtung (1) für eine Waffe mit einer ersten Stellvorrichtung (12) nach einem der vorhergehenden Ansprüche, wobei das Stellelement (8) in seiner Arbeitslage einen Waffenabzug (10) zur Schußauslösung betätigt.

11. Abzugsvorrichtung (1) nach Anspruch 10, bei welcher der erste Stellantrieb (30) der Stellvorrichtung (12, 20) ferngesteuert über einen Schalter (22, 24) betätigbar ist.

12. Abzugsvorrichtung (1) nach Anspruch 10 oder 11, bei welcher eine zweite Stellvorrichtung (20) nach einem der Ansprüche 1 bis 10 vorgesehen ist, welche auf eine Sicherungseinrichtung (18) der Waffe wirkt, wobei das Stellelement (16) der zweiten Stellvorrichtung (20) in seiner Arbeitslage die Sicherungseinrichtung (18) in eine entsicherte Stellung bringt.

13. Abzugsvorrichtung (1) nach Anspruch 12, mit einem Schalter, der sowohl die erste (12) als auch die zweite Stellvorrichtung (20) aktiviert.

14. Abzugsvorrichtung (1) nach Anspruch 12, bei welcher für die erste Stellvorrichtung (12) und die zweite Stellvorrichtung (20) jeweils getrennte Schalter (22, 24) zu deren Aktivierung vorgesehen sind.

15. Waffe mit einer Stellvorrichtung (12, 20) nach einem der Ansprüche 1 bis 9 bzw. einer Abzugsvorrichtung (1) nach einem der Ansprüche 10 bis 14.

## Claims

1. A setting device (12, 20) for actuating a trigger /firing-selection or safety device of a weapon with a first setting drive (30) which acts in the operating direction and which is designed to move a setting element (8, 16) out of a rest position into an operating position in which it actuates a trigger (10) or a safety / firing-selection lever (18), wherein the first setting drive (30) is capable of being coupled to the setting element (8) in a releasable manner by way of an engageable coupling (52), is designed in the form of a pivot drive and acts upon the setting element (8) designed in the form of a pivot lever, **characterized in that** a second setting drive (70) is provided which acts in a direction opposed to the operating direction, in order to move the setting element (8) out of the operating position into its rest position when the coupling (52) is released.

2. A setting device (12, 20) according to claim 1, in which the second setting drive (70) is designed in the form of a pivot drive.

3. A setting device (12, 20) according to claim 1 or 2, in which the first setting drive (30) is driven by a motor, and in particular is designed in the form of a worm-gear transmission unit (34, 36) with an electric motor (32), and the second setting drive 70 is designed in the form of a drive unit capable of being tensioned, in particular in the form of a spring drive unit.

4. A setting device (12, 20) according to claim 3, in which the first setting drive (30), the second setting drive (70) and the coupling (52) are designed and arranged in such a way that when the first setting drive (30) is in operation and with the coupling (52) in action said first setting drive (30) moves the setting element (8) into the operating position and tensions the second setting drive (70).

5. A setting device (12, 20) according to any one of the preceding claims, in which the coupling (52) is designed in the form of a spring-loaded, electromagnetically operating coupling, and is arranged in such a way that it occupies its coupling setting when energized electrically.

6. A setting device (12, 20) according to any one of claims 2 to 5, in which the first setting drive (30) and the setting element (8) are arranged on two parallel pivot axes.

7. A setting device (12, 20) according to claim 6, in which the first setting drive (30) and the setting element (8) are coupled by way of a coupling transmission (26), in particular a sliding crank.

8. A setting device (12, 20) according to any one of claims 2 to 7, in which the setting path of the first setting drive (30) is capable of being fixed by way of a contact member (42) acting upon a switch (48), in particular designed in the form of a pivotable control cam, in a manner corresponding to the setting path of the setting element (8).

9. A setting device (12, 20) according to any one of the preceding claims, in which the second setting drive (70) is arranged coaxially with the pivot axis of the setting element (8).

10. A trigger device (1) for a weapon with a first setting device (12) according to any one of the preceding claims, in which the setting element (8) in its operating position actuates a trigger (10) for firing a shot.

11. A trigger device (1) according to claim 10, in which the first setting drive (30) of the setting device (12, 20) is capable of being actuated in a remote-controlled manner by way of a switch (22, 24).

12. A trigger device (1) according to claim 10 or 11, in which a second setting device (20) according to any one of claims 1 to 10 is provided, which acts upon a safety device (18) of the weapon, wherein the setting element (16) of the second setting device (20) in its operating position moves the safety device (18) into a released position.

13. A trigger device (1) according to claim 12, with a switch which activates both the first setting device (12) and the second setting device (20).

14. A trigger device (1) according to claim 12, in which separate switches (22, 24) are provided in each case for the first setting device (12) and the second setting device (20) for the activation thereof.

15. A weapon with a setting device (12, 20) according to any one of claims 1 to 9 or a trigger device (1) according to any one of claims 10 to 14.

## Revendications

1. Dispositif de réglage (12, 20) pour l'actionnement d'un dispositif de sélection de détente/feu ou de sûreté d'une arme avec un premier mécanisme de commande (30) agissant dans un sens de travail qui est réalisé afin de régler un élément de réglage (8, 16) d'une position de repos à une position de travail, dans laquelle il actionne une détente d'arme (10) ou un levier de sélection de sûreté/feu (18),
le premier mécanisme de commande (30) pouvant être couplé de manière amovible via un couplage (52) commutable à l'élément de réglage (8), étant réalisé comme un entraînement pivotant et sur lequel agit l'élément de réglage (8) réalisé comme un levier de pivotement, **caractérisé en ce que**
un second mécanisme de commande (70) est prévu, lequel agit dans le sens contraire au sens de travail afin d'amener l'élément de réglage (8) de la position de travail à sa position de repos lorsque le couplage (52) est détaché.

2. Dispositif de réglage (12, 20) selon la revendication 1, pour lequel le second mécanisme de commande (70) est réalisé comme des entraînements de pivotement.

3. Dispositif de réglage (12, 20) selon la revendication 1 ou 2, pour lequel le premier mécanisme de commande (30) est entraîné par moteur, est réalisé en particulier comme une unité d'engrenages à vis sans fin (34, 36) avec un moteur électrique (32) et le second mécanisme de commande (70) est réalisé comme une unité d'entraînement pouvant subir la tension, en particulier comme une unité d'entraînement par ressort.

4. Dispositif de réglage (12, 20) selon la revendication 3, pour lequel le premier mécanisme de commande (30), le second mécanisme de commande (70) et le couplage (52) sont réalisés et disposés de sorte que le premier mécanisme de commande (30) amène en fonctionnement et en couplage actif (52), l'élément de réglage (8) en position de travail et tend le second mécanisme de commande (70).

5. Dispositif de réglage (12, 20) selon l'une quelconque des revendications précédentes, pour lequel le couplage (52) est réalisé comme un couplage commandé par ressort, agissant de manière électromagnétique et est disposé de sorte qu'il occupe sa position de couplage en cas d'excitation électrique.

6. Dispositif de réglage (12, 20) selon l'une quelconque des revendications 2 à 5, pour lequel le premier mécanisme de commande (30) et l'élément de réglage (8) sont disposés sur deux axes de pivotement parallèles.

7. Dispositif de réglage (12, 20) selon la revendication 6, pour lequel le premier mécanisme de commande (30) et l'élément de réglage (8) sont couplés par un engrenage couplé (26), en particulier un mécanisme à coulisse.

8. Dispositif de réglage (12, 20) selon l'une quelconque des revendications 2 à 7, pour lequel la course de réglage du premier mécanisme de commande (30) peut être définie de manière à correspondre à la course de réglage souhaitée de l'élément de réglage (8) par le biais d'une pièce de contact (42) agissant sur un commutateur (48), réalisée en particulier comme une came de contacteur pouvant pivoter.

9. Dispositif de réglage (12, 20) selon l'une quelconque des revendications précédentes, pour lequel le second mécanisme de commande (70) est disposé de manière coaxiale à l'axe de pivotement de l'élément de réglage (8).

10. Dispositif de détente (1) pour une arme avec un premier dispositif de réglage (12) selon l'une quelconque des revendications précédente, dans lequel l'élément de réglage (8) actionne dans sa position de travail une détente d'arme (10) pour le déclenchement du tir.

11. Dispositif de détente (1) selon la revendication 10, pour lequel le premier dispositif de réglage (30) du dispositif de commande (12, 20) peut être actionné de manière télécommandée par un commutateur (22, 24).

12. Dispositif de détente (1) selon la revendication 10 ou 11, pour lequel un second dispositif de réglage (20) selon l'une quelconque des revendications 1 à 10 est prévu, lequel agit sur un dispositif de sûreté (18) de l'arme, l'élément de réglage (16) du second dispositif de réglage (20) dans sa position de travail amenant le dispositif de sûreté (18) dans une position, dans laquelle la sûreté est ôtée.

13. Dispositif de détente (1) selon la revendication 12, avec un commutateur qui active le premier (12) ainsi que le second dispositif de réglage (20).

14. Dispositif de détente (1) selon la revendication 12, pour lequel pour le premier dispositif de réglage (12) et le second dispositif de réglage (20) sont prévus respectivement des commutateurs (22, 24) séparés pour leur activation.

15. Arme avec un dispositif de réglage (12, 20) selon l'une quelconque des revendications 1 à 9 ou un dispositif de détente (1) selon l'une quelconque des revendications 10 à 14.
